# EUROPÄISCHE PATENTSCHRIFT

(11) **EP 0 725 716 B1**
(45) Veröffentlichungstag und Bekanntmachung des Hinweises auf die Patenterteilung: **09.12.1998**
(21) Anmeldenummer: 93906475.4
(22) Anmeldetag: 02.03.1993
(51) Int. Cl.: B28D 1/18, B24B 55/05, B23Q 11/06

(54) **FUGENSCHNEIDER**
JOINT CUTTER
COUPE-JOINT

(30) Priorität: 03.03.1992 DE 9202769 U
(43) Veröffentlichungstag der Anmeldung: 14.08.1996
(73) Patentinhaber: BATSCHARI, Constantin, D-61118 Bad Vilbel (DE); MITTLÄNDER, Herbert, D-60594 Frankfurt am Main (DE)
(72) Erfinder: BATSCHARI, Constantin, D-61118 Bad Vilbel (DE); MITTLÄNDER, Herbert, D-60594 Frankfurt am Main (DE)
(74) Vertreter: Stoffregen, Hans-Herbert, Dr. Dipl.-Phys.
(86) Internationale Anmeldenummer: EP9300466
(87) Internationale Veröffentlichungsnummer: WO9317849

(56) Entgegenhaltungen:
- EP-A- 0 314 954
- BE-A- 669 110
- DE-A- 3 919 701
- DE-B- 1 052 099
- DE-C- 3 811 197

## Beschreibung

Die Erfindung bezieht sich auf einen Fugenschneider umfassend einen von einem mit einem Gehäuse versehenen Antrieb betätigten Werkzeugsatz in Form zweier vorzugsweise zueinander verstellbarer Scheiben wie Diamantscheiben sowie eine den Werkzeugsatz teilweise umgebende, zwei miteinander verbindbare Abschnitte umfassende Abdeckung wie Verkleidung mit einem Schlitz, über den ein Segment des Werkzeugsatzes freigelegt ist.

Mit entsprechenden Fugenschneidern, die sich z. B. für anfallende Schlitzarbeiten bei der Elektroinstallation eignen, lassen sich problemlos Längsschlitze entlang einer Wand schneiden, wobei dies in jeder Richtung, also von oben nach unten oder von unten nach oben erfolgen kann. Durch die Verstellbarkeit der Scheiben zueinander können Schlitze in gewünschter Breite erzeugt werden. Auch weisen entsprechende Fugenschneider Maßnahmen vor, um anfallenden Staub absaugen zu können.

Die sicherheitstechnischen Vorschriften sehen vor, daß der Werkzeugsatz weitgehend abgedeckt ist, so daß nur ein Segment, mit dem gearbeitet wird, freiliegt. Will man nun Schlitze in Vorsprüngen wie Stürzen oder ähnliches schneide, so können entsprechende Fugenschneider nicht in den horizontal verlaufenden Bereichen benutzt werden. Vielmehr muß durch Aufstämmen der entsprechenden Flächen ein Schlitz für ein zu verlegendes Kabel, Rohr oder ähnliches gewonnen werden. Dies ist insbesondere bei professionellen Arbeiten von Nachteil, da ein solches Aufstämmen einerseits zeitaufwendig ist und andererseits nicht mit der hohen Präzision durchführbar ist, wie es mit einem angetriebenen Werkzeug der Fall ist.

Aus der DE 38 11 197 A1 ist eine Adaptervorrichtung für eine von Hand geführte Werkzeugmaschine bekannt, bei der eine Schleif- oder Frässcheibe von einer Verkleidung teilweise abgedeckt ist, die allen ein Segment freigibt, das in seiner Höhe einstellbar ist.

In der DE 39 19 649 A1 wird eine Winkelschleiferschutzhaube beschrieben, die einteilig eine Schleifscheibe bereichsweise umgibt.

Eine parallel zu einer Diamantscheibe zweigeteilte Abdeckung für ein Handgerät zum Fräsen von Nuten wird in der EP 0 314 954 beschrieben.

Bei einem zweiteiligen Schutzgehäuse für einen Fugenschneider wird ein vorderer Abschnitt zu einem hinteren Abschnitt des Gehäuses verschwenkt, indem ersteres mit einem Zugseil verbunden ist, das von einem z.B. in eine Mauer eingeschlagenen Nagel ausgeht (DE.B 1 052 099). Ein entsprechendes Schutzgehäuse ist umständlich handhabbar und mit dem Nachteil behafter, daß dervordere Abschnitt unkontrolliert zurückschwenkt. Durch das Verschwenken des vorderen Abschnitts in den Bereich des hinteren hinein besteht keine Möglichkeit, an diesem einen Absaugstutzen anzubringen, dessen Öffnung andernfalls vom vorderen Abschnitt abgedeckt werden könnte.

Der vorliegenden Erfindung liegt daher das Problem zugrunde, einen Fugenschneider der zuvor beschriebenen Art so weiterzubilden, daß problemlos Schiltze auch im Übergangsbereich zwischen im Winkel zueinander verlaufenden Flächen möglich sind, daß quasi "un die Ecke herum" gefräst werden kann, ohne daß es Hilfsmittel bedarf, die zusätzlich zum Fugenschneider notwendig sind.

Das Problem wird erfindungsgemäß dadurch gelöst, daß von dem Antriebsgehäuse eine Halterung ausgeht, die mit einem hinteren Abschnitt der Abdeckung verschiebbar derart verbunden ist, daß die Höhe des aus dem Schlitz der Abdeckung freigelegten Segments des Werkzeugsatzes einstellbar ist, daß ein von dem einen Absaugstutzen aufweisenden hinteren Abschnitt abnehmbarer vorderer Abschnitt der Abdeckung ein weiteres Segment des Werkzeugsatzes abdeckt, wobei die Segmente des Werkzeugsatzes bei entferntem vorderen Abschnitt der Abdeckung senkrecht oder im, wesentlichen senkrecht sich schneidende Sehnen aufweisen.

Durch die erfindungsgemäße Lehre ist es folglich ohne Schwierigkeiten möglich, in Eckbereichen oder im Übergangsbereich von zwei z. B. einen rechten Winkel zueinander beschreibenden Flächen Schlitze zu schneiden, da es nur noch erforderlich ist, den vorderen Abschnitt der Abdeckung zu emfernen, so daß ein weiteres Segment des Werkzeugsatzes zur Durchführung von Arbeiten freigelegt ist, welches vorzugsweise senkrecht zu dem ansonsten freigelegten Segment verläuft.

Um ein einfaches, jedoch sicheres Zusammensetzen der Abschnitte der Abdeckung zu ermöglichen, bilden die Ränder eines Abschnitts, vorzugsweise des hinteren Abschnitts Aufnahmen für Ränder oder von diesen ausgehenden Vorsprüngen des anderen Abschnitts.

Die Vorsprünge können als in den Aufnahmen verrastbare Haken ausgebildet sein, wobei die Aufnahmen selbst vorzugsweise als Aufnahmeschlitze ausgebildet sind.

Andere lösbare Verbindungsamen sind gleichfalls möglich.

Um ein unkontrolliertes Verrutschen von Halterung und Abdeckung zu gewährleisten, umfaßt die Halterung vorzugsweise zwei zueinander abgewinkelte plattenförmige Abschnitte, die sich entlang von Flächen des hinteren Abschnitts der Abdeckung erstrecken.

Eine Weiterbildung der Erfindung sieht außerdem vor, daß der hintere Abschnitt eine Handhabe aufweist, die gleichzeitig die Funktion des Absaugstutzens ausüben kann.

Um ein einfaches Entlanggleiten des Fugenschneiders auf der Wandung, in die der Schlitz geschnitten werden soll, zu ermöglichen, ist vorgesehen, daß jeder Abschnitt zumindest ein Gleitelement umfaßt, das um eine Achse drehbar ist, die parallel zur von dem Schlitz der Abdeckung aufgespannten Ebene verläuft.

Weitere Einzelheiten, Vorteile und Merkmale der Erfindung ergeben sich nicht nur aus den Ansprüchen den diesen zu entnehmenden Merkmalen - für sich und/oder in Kombination - sondern auch aus der nachfolgenden Beschreibung eines der Zeichnung zu entnehmenden bevorzugten Ausführungsbeispiels.

Es zeigen:

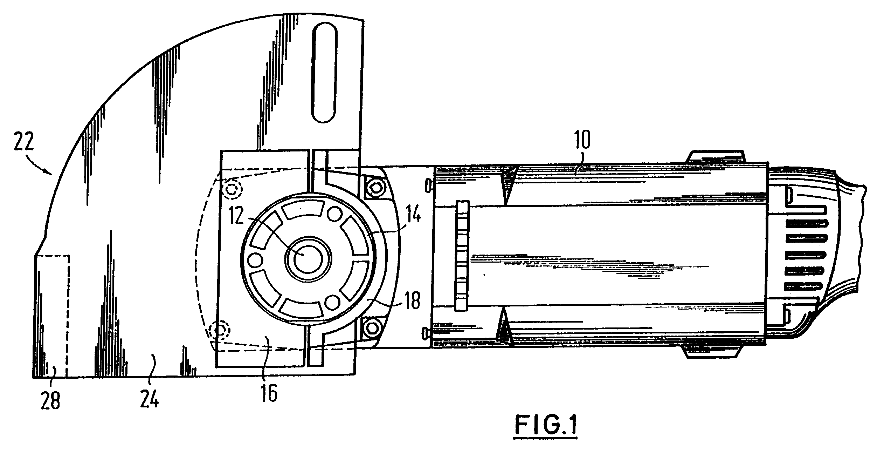

- Fig. 1: eine Seitenansicht eines Fugenschneiders mit Halterung für eine Abdeckung.

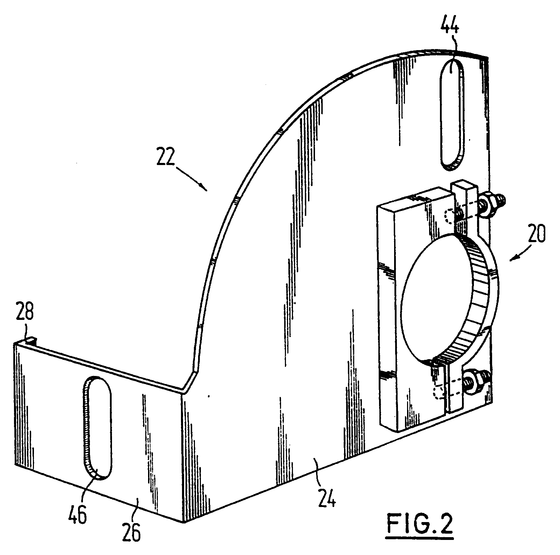

- Fig. 2: die Halterung gemäß Fig. 1.

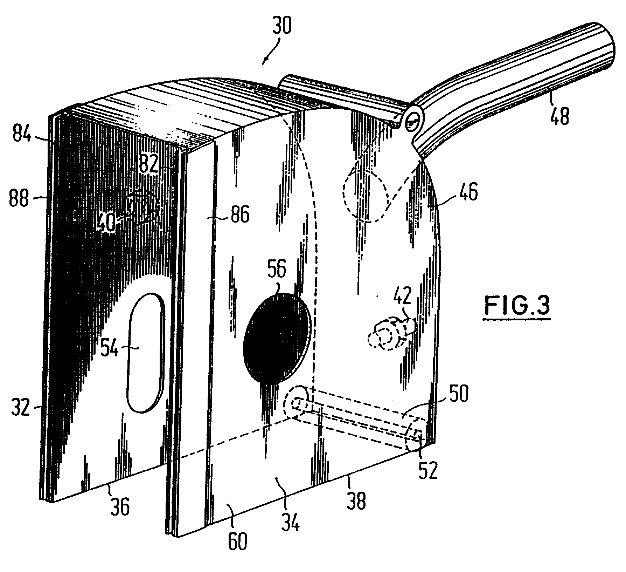

- Fig. 3: einen hinteren Abschnitt einer Abdeckung und
- Fig. 4: einen vorderen Abschnitt einer aus dieser und dem hinteren Teil gemäß Fig. 3 zusammengesetzten Abdeckung.

In den Figuren sind wesentliche Bestandteile eines bekannten Fugenschneiders dargestellt, die vom konstruktiven Aufbau hinreichend bekannt ist.

So umfaßt der Fugenschneider einen Antrieb in Form eines Elektromotors, der in einem, Gehäuse (10) angeordnet ist. Von dem Gehäuse (10) geht eine Welle (12) aus, auf die nicht dargestellte und zueinander verstellbare Scheiben wie Diamantscheiben befestigbar sind.

Die Welle (12) ist voll einem scheibenförmigen Ansatz (14) umgeben, der von aus Teilen (16) und (18) bestehendem Spannring (20) aufgenommen und in diesem festgespannt wird.

Der Spannring (20) geht von einer Halterung (22) aus, der aus Zwei plattenförmigen Abschnitten (24) und (26) besteht, die Zueinander einen rechten Winkel beschreiben. Von dem kleineren eine Rechteckform aufweisenden Abschnitt (26) geht wiederum ein abgewinkelter Rand (28) aus.

Die Abschnitte (24) und (26) mit dem abgewinkelten Rand (28) bilden folglich ein ungleichschenkliges U, wobei jedoch der Abschnitt der einander zugewandten Flächen des Randes (28) und des Abschnitts (24) dem Außenmaß eines mit der Halterung (22) lösbar verbindbaren hinteren Abschnitts (30) einer Abdeckung angepaßt ist. die bereichweise das nicht dargestellte und von der Welle ausgehende Werkzeug umgibt.

Der Abschnitt (30) besteht aus einer - in der Zeichnung hinteren - Seitenwandung (32) und einer parallel hierzu verlaufenden Zweiten - vorderen - Seitenwandung (34). Entlang der Außenfläche der Wandung (32) erstreckt sich folglich der Abschnitt (24), wobei die Konturen aufeinander abgestimmt sind.

Die von den unteren Rändern (36) und (38) des Abschnitts (30) aufgespannte Ebene wird sodann von einem Segment der nicht dargestellten Scheiben durchsetzt, wobei die Höhe des Segments einstellbar ist. Hierzu ist der Abschnitt (30) in bezug auf die Halterung (22) verstellbar. Dies wird dadurch ermöglicht, daß von dem Abschnitt (30) ausgehende Befestigungselemente (40) und (42) in der Halterung (22) verlaufende Langlöcher (44) und (46) durchsetzen.

Die Langlöcher (44) und (46) verlaufen in einer senkrecht zu der von den Rändern (36) und (38) der Wandungen (32) und (34) aufgespannten Ebene, so daß infolgedessen die Höhe des freiliegenden Segments des Werkzeugsatzes einstellbar ist, wodurch wiederum die Schlitztiefe vorgegeben wird.

Voll einer die parallel zueinander verlaufenden Seitenwandungen (32) und (34) verbindenden Rückwandung (46) geht eine Handhabe (48) aus, die gleichzeitig als Absaugstutzen dient.

Schließlich erstreckt sich im Bereich der Ränder (36) und (38) ein als Führungswalze zu bezeichnendes Gleitelement (50), welches um eine parallel zu der Achse des Werkzeugsatzes verlaufende Achse (52) drehbar ist. Die Führungswalze (50) wird beim Schneiden auf der Fläche abgestutzt, in die ein Schlitz eingebracht werden soll.

Das in der Wandung (52) vorhandene Langloch (54) wird von der Welle (12) des Antriebs durchsetzt.

Auf der gegenüberliegenden Wandung (34) befindet sich eine kreisförmige Durchbrechung (56), über die die Welle (12) zugänglich ist, um auf diese Weise gegebenenfalls den Abstand zwischen den Scheibe, einstellen zu können.

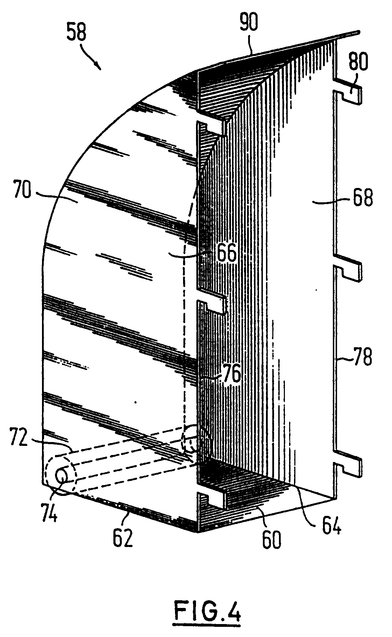

Mit dem hinteren Abschnitt (30) der Abdeckung bzw. Verkleidung des Werkzeugsatzes ist ein in der Fig. 4 dargestellter vorderer Abschnitt (58) lösbar verbunden, so daß beim zusammengesetzten vorderen und hinteren Abschnitt (58) und (30) eine Gesamtabdeckung zur Verfügung stellt, deren offene Basisfläche (60), die von den Rändern (36) und (38) des Abschnitts (30) bzw. Rändern (62) und (64) des Abschnitts (58) begrenzt ist, einen Schlitz bildet. Dieser Schlitz (60) wird von einem Segment des Werkzeugsatzes durchsetzt.

Der vordere Abschnitt (58), der kleiner als der hintere Abschnitt (30) ist, weist gleichfalls zwei parallele Seitenwandungen (66) und (68) auf, die über eine gebogene vordere Wandung (70) verbunden sind. Im Bodenbereich, also im Bereich des Schlitzes (60) ist ebenfalls ein Gleitelement in Form einer Führungswalze (72) vorgesehen, die um eine Achse (74) parallel zur Achse des Werkzeuges drehbar ist.

Damit der vordere Abschnitt (58) mit dem hinteren Abschnitt (30) lösbar verbunden werden kann, gehen von den Längsrändern (76) und (78) der Wandungen (66) und (68) hakenförmige Vorsprünge (80) aus, die in schlitzförmige Aufnahmen (82) und (84) eingreifen die in den Längsrändern (86) und (88) der Wandungen (32) und (34) des hinteren Abschnitts (30) der Abdeckung vorhanden sind.

Ferner kann ein Abschnitt (90) der Wandung (70) bereichsweise die Wandung (46) des hinteren Abschnitts (30) überdecken. Eine Alternative oder zusätzliche Verriegelungsmöglichkeit oder eine sonstige Verbindung zwischen dem vorderen und hinteren Abschnitt (58), (30) der Abdeckung ist möglich, um ein unkontrolliertes Lösen zu unterbinden.

Bei normalen Schneidarbeiten ist der Werkzeugsatz von den Abschnitten (58) und (30) abgedeckt, so daß allein ein Segment des Werkzeugsatzes den Schlitz (60) durchsetzt. Soll in einem Eckbereich gleichfalls gefräst werden, so wird der vordere Abschnitt (58) entfernt, so daß nicht nur mit dem den Schlitz (60) durchsetzenden Segment sondern auch mit einem die von den Rändern (86) und (88) des hinteren Abschnitts (30) begrenzte Stirnfläche durchsetzenden Segment gefräst werden kann.

## Patentansprüche

1. Fugenschneider umfassend einen von einem mit einem Gehäuse (10) versehenen Antrieb (12) betätigten, aus Scheiben bestehenden Werkzeugsatz sowie eine den Werkzeugsatz teilweise umgebende zwei miteinander verbindbare Abschnitte (30, 58) umfassende Abdeckung wie Verkleidung mit einem Schlitz, über den ein Segment des Werkzeugsatzes freigelegt ist,
**dadurch gekennzeichnet**,
daß von dem Antriebsgehäuse (10) eine Halterung (22) ausgeht, die mit einem hinteren Abschnitt (50) der Abdeckung verschiebbar derart verbunden ist, daß die Höhe des aus dem Schlitz (60) der Abdeckung freigelegten Segments des Werkzeugsatzes einstellbar ist, daß ein vom dem einen Absaugstutzen (48) aufweisenden hinteren Abschnitt abnehmbarer vorderer Abschnitt (58) der Abdeckung ein weiteres Segment des Werkzeugsatzes abdeckt, wobei die Segmente des Werkzeugsatzes bei entferntem vorderen Abschnitt (58) der Abdeckung senkrecht oder im wesentlichen senkrecht sich schneidende Sehnen aufweisen.

2. Fugenschneider nach Anspruch 1,
**dadurch gekennzeichnet**,
daß die Halterung (22) zwei zueinander abgewinkelte plattenförmige Abschnitte (24, 26) umfaßt, die sich entlang von Außenflächen des hinteren Abschnitts (30) der Abdeckung erstrecken.

3. Fugenschneider nach zumindest einem der vorhergehenden Ansprüche,
**dadurch gekennzeichnet**,
daß jeder der Abschnitte (30, 58) der Abdeckung zumindest ein Gleitelement (50, 72) umfaßt, das um eine Achse (52, 74) drehbar ist, die parallel zur von dem Schlitz (60) der Abdeckung aufgespannten Ebene verläuft.

4. Fugenschneider nach zumindest Anspruch 1,
**dadurch gekennzeichnet**,
daß Ränder (86, 88) eines Abschnitts (30) der Abdeckung Aufnahmen (82, 84) für Ränder (76, 78) oder von diesen ausgehende Vorsprünge (80) des anderen Abschnitts (58) bilden.

5. Fugenschneider nach Anspruch 4,
**dadurch gekennzeichnet**,
daß die Vorsprünge (80) in den Aufnahmen (82, 84) verrastbare Haken sind.

## Claims

1. A joint cutter comprising a tool set consisting of disks and operated by a drive (12) that is provided with a housing (10), and a covering that partially surrounds the tool set and comprises two mutually attachable sections (30, 58) like a covering, with a slot through which a segment of the tool set can project,
**characterized in that**
a mounting (22) extends from the drive housing (10), this being moveably connected to a rear section (30) of the covering such that the height of the segment of the tool set that projects from the slot (60) in the covering is adjustable; in that a front section (58) of the covering, which can be removed from the rear section that incorporates a vacuum connector (48), covers an additional segment of the tool set, the segments of the tool set having chords that intersect perpendicularly or essentially perpendicularly when the front section (58) of the covering is removed.

2. A joint cutter according to Claim 1,
**characterized in that**
the mounting (22) has two plate-shaped sections (24, 26) that are disposed at an angle to each other, that extend along the outer surfaces of the rear section (30) of the covering.

3. A joint cutter according to at least one of the preceding claims,
**characterized in that**
each of the sections (30, 58) of the covering includes at least one slider element (50, 72) that is rotatable about a shaft (52, 74) that is parallel to the plane subtended by the slot (60) in the covering.

4. A joint cutter according to at least Claim 1,
**characterized in that**
the edges (86, 88) of a section (30) of the covering form receptacles (82, 84) for edges (76, 78) of the other section (58) or for projections (80) that extend from these.

5. A joint cutter according to Claim 4,
**characterized in that**
the projections (80) are hooks that enter into detent in the receptacles (82, 84).

## Revendications

1. Rainureuse comprenant un jeu d'outils, composé de disques entraînés par un moteur (12) logé dans un carter (10), ainsi qu'un capot entourant partiellement ledit jeu d'outils, composé de deux sections (30, 58) pouvant être reliées et comportant une fente, laissant apparaître un segment du jeu d'outils,
**caractérisé en ce que**
le carter (10) du moteur est doté d'un plateau support (22), relié de façon mobile à la section arrière (30) du capot, de manière à pouvoir régler la hauteur du segment du jeu d'outils dépassant à travers la fente (60), et en ce qu'une section avant (58) du capot, pouvant être détachée de ladite section arrière, dotée à son tour d'un raccord d'aspiration (48), couvre un autre segment du jeu d'outils, les deux cordes soustendant les segments du jeu d'outils qui dépassent le capot si sa partie avant (58) a été enlevée étant perpendiculaires ou sensiblement perpendiculaires.

2. Rainureuse selon revendication 1
**caractérisé en ce que**
le plateau support (22) comporte deux parties plates (24, 26) qui forment un angle et qui s'étendent le long des faces extérieures de la section arrière (30) du capot.

3. Rainureuse selon au moins une des revendications précédentes
**caractérisé en ce que**
chacune des sections (30, 58) du capot comporte au moins un rouleau d'appui (50, 72), tournant autour d'un axe (52, 74) qui s'étend parallèlement au plan tendu par la fente (60) du capot.

4. Rainureuse selon au moins revendication 1
**caractérisé en ce que**
les bords (86, 88) de l'une des sections (30) du capot comportent des logements (82, 84) destinés aux bords (76, 78) de l'autre section (58) du capot ou aux saillies (80) qui dépassent de ces bords.

5. Rainureuse selon revendication 4
**caractérisé en ce que**
les saillies (80) sont des crochets s'encliquetant dans les logements (82, 84).
